# EUROPÄISCHE PATENTANMELDUNG

(11) **EP 2 824 498 A1**
(43) Veröffentlichungstag der Anmeldung: **14.01.2015**
(21) Anmeldenummer: 14171933.6
(22) Anmeldetag: 11.06.2014
(51) Int. Cl.: G02B 21/33, G02B 21/24

(54) **Verfahren zur Detektion und Zufuhrsteuerung eines Immersionsmediums**

(30) Priorität: 11.07.2013 DE 102013011543
(71) Anmelder: Carl Zeiss Microscopy GmbH, 07745 Jena (DE)
(72) Erfinder: Steinmeyer, Ralf, 30165 Hannover (DE); Mitzkus, Reiner, 37085 Göttingen (DE); Rojahn, Timo, 37170 Uslar (DE)
(74) Vertreter: Scholze, Humbert

(57) **Zusammenfassung**

Die Erfindung betrifft Verfahren zur Detektion und zur Zufuhrsteuerung eines Immersionsmediums in den Immersionsfilmbereich zwischen der Frontlinse eines Mikroskopobjektivs und einem Präparat, insbesondere bei automatisierten Mikroskopen, unter Verwendung einer Lichtquelle, welche über einen Strahlteiler in den Mikroskopstrahlengang eingespiegelt wird. Erfindungsgemäß wird ein Autofokussignal der Lichtquelle und/oder ein Reflex eines in der Zwischenbildebene einer Auflichtbeleuchtung angeordneten Modulationsobjektes den Zustand des Immersionsfilmbereiches in einer Detektionseinheit des Mikroskops oder einer Detektionseinheit der Autofokuseinrichtung erfasst, ausgewertet und zum Zwecke einer Veränderung sowie einer Fehlerbehandlung des Immersionsvorganges an eine Steuereinheit weitergeleitet.

## Beschreibung

Die Erfindung betrifft ein Verfahren zur Detektion und zur Zufuhrsteuerung eines Immersionsmediums in den Immersionsfilmbereich zwischen der Frontlinse eines Mikroskopobjektivs und einem Präparat, insbesondere bei automatisierten Mikroskopen, unter Verwendung einer Autofokuseinrichtung mit einer Lichtquelle, welche über einen Strahlteiler in den Mikroskopstrahlengang eingespiegelt wird.

In der modernen Mikroskopie werden, insbesondere im High-EndBereich, viele optisch hochwertige Objektive so berechnet und ausgelegt, dass sie nur dann optimal arbeiten, wenn der Spalt zwischen der Frontlinse eines Objektives und dem zu beobachtenden Präparat mit einem sogenannten Immersionsmedium gefüllt ist. Dieses Immersionsmedium hat die Aufgabe aufgrund seiner optischen Eigenschaften, die denen von Glas mehr ähneln als denen von Luft, für bessere optische Eigenschaften bei der Abbildung zu sorgen. Sobald es sich um ein Mikroskop mit Inkubationseinrichtung oder anderen in der Umgebung des Objektes platzierten Anbauteilen handelt, ist die manuelle Applikation dieses Immersionsmediums jedoch nur sehr umständlich möglich. Ebenfalls ist es dem Bediener kaum möglich den Zustand der Immersion zu beurteilen, da sie in der Regel nur sehr schlecht bis gar nicht einzusehen ist. Bei automatisierten Mikroskopen ist ein Zugriff, beziehungsweise eine Kontrolle sogar vollkommen ausgeschlossen, da sich das ganze Mikroskop in einem in sich geschlossenen Gehäuse befindet.

In DE 102006042088 B4 wird eine Vorrichtung und ein Verfahren zum Ausbilden eines Immersionsfilmes zwischen einer Linse eines Mikroskopobjektivs und einem Probenträger mit einem objektivfesten Element, welches den Immersionsfilmbereich definiert, beschrieben. Über eine Sensoreinheit wird die Beschaffenheit des Immersionsfilmes im Immersionsfilmbereich detektiert. In Abhängigkeit vom Zustand des Immersionsfilmes erfolgt die gesteuerte Zufuhr der Immersion in den Filmbereich. Nachteilig bei dieser Lösung ist, dass eine objektivfeste Sensoreinheit vorhanden ist, die sich nachteilig auf den konstruktiven Aufbau eines Mikroskops auswirkt.

Ferner wird in JP 2012093387 A2 ein Mikroskopsystem beschrieben, bei dem eine Detektion der Immersionsflüssigkeit über die Auswertung der Fokuskoordinate vorgenommen wird. Dabei wird der Umstand ausgenutzt, dass die Fokuskocrdinate beim Abreißen der Immersionsflüssigkeit wandert, da sich ohne eine Immersionsflüssigkeit der Fokuspunkt des Mikroskopobjektivs verschiebt. Bei dieser Lösung ist die Ermittlung des Fokusversatzes sehr aufwendig.

Ausgehend von den Lösungen des Standes der Technik liegt der Erfindung zugrunde, ein Verfahren zur Detektion und zur Zufuhrsteuerung eines Immersionsmediums dahingehend weiter zu entwickeln, dass ohne zusätzlich speziell für diesen Zweck entwickelte Hardwarekomponenten, unabhängig von den Umgebungsparametern, wie Füllstand des Systems oder dem Zeitpunkt der letzten Immersion die Zufuhr der Immersionsflüssigkeit so gesteuert werden kann, dass immer die benötigte Menge im Immersionsfilmbereich vorhanden ist.

Erfindungsgemäß wird diese Aufgabe durch ein Verfahren der eingangs beschriebenen Art unter Verwendung einer Autofokuseinrichtung für die Mikroskopie nach WO 2007/144197 A1 mit den Verfahrensschritten nach Patentanspruch 1 gelöst.

Vorteilhafte Ausführungsvarianten sind in den Unteransprüchen 2 bis 10 angegeben.

Erfindungsgemäß wird über ein Autofokussignal der Lichtquelle und/oder über einen Reflex eines in der Zwischenbildebene einer Auflichtbeleuchtung angeordneten Modulationsobjektes der Zustand des Immersionsfilmbereiches in einer Detektionseinheit des Mikroskops oder einer Detektionseinheit der Autofokuseinrichtung erfasst, ausgewertet und zum Zwecke einer Veränderung sowie einer Fehlerbehandlung des Immersionsvorganges an eine Steuereinheit weitergeleitet wird.

Im Einzelnen erfolgt dies durch folgende Verfahrensschritte:
- Vorzugsweise automatische Fokussierung ohne Immersionsmedium zwischen der Frontlinse und einem Präparat auf den Boden eines Präparateträgers,
- Erfassen des Autofokussignals als Rückreflex von einer Autofokuseinrichtung und/oder Erfassen des Reflexes des in der Zwischenbildebene der Auflichtbeleuchtung angeordneten Modulationsobjektes durch eine der Detektionseinheiten,
- Anpassen des Autofokussignals und/oder des Reflexes vom Modulationsobjekt von der Software der verwendeten Einrichtung an den maximalen Dynamikbereich der verwendeten Detektionseinheit (Skalierung),
- Zufuhr des Immersionsmediums in den Immersionsfilmbereich zwischen der Frontlinse und dem Präparat (Autoimmersion),
- Erfassen und Detektieren der veränderten Intensität des Autofokussignals als Rückreflex und/oder als Veränderung der optischen Weglänge zwischen der Frontlinse und der reflektierenden Grenzfläche des Immersionsfilmbereiches und/oder Erfassen und detektieren der veränderten Intensität und/oder der Schärfe des Reflexes vom Modulationsobjekt und
- Verändern oder Stoppen der Zufuhr des Immersionsmediums in Abhängigkeit von der Skalierung der Intensität des Autofokussignals und/oder der Weglängenveränderung des Autofokussignals und/oder der Intensität des Reflexes vom Modulationsobjekt.

Das Autofokussignals besteht aus verschiedenen Rückreflexen, die in Abhängigkeit von den im Strahlengang vorhandenen Grenzflächen zwischen unterschiedlichen Materialien variieren. Diese Variation der Intensitäten wird genutzt, um den Übergang zwischen den verschiedenen Zuständen der Immersion, wie "Kein Immersionsmedium vorhanden" oder "Immersion hergestellt" zu unterscheiden.

Insbesondere der Unterschied zwischen dem Autofokussignal eines Luft/Glas-Überganges und dem eines Immersionsmedium/Glas-Überganges ist bedingt durch den erheblichen Brechzahlunterschied zwischen Luft und Immersionsmedium sehr erheblich.

Nachdem das Immersionsmedium in den Spalt zwischen der Frontlinse des Mikroskopobjektivs und dem Präparat (Immersionsfilmbereich) eingebracht wurde verringert sich der Rückreflex erheblich, beziehungsweise verschwindet bei der gewählten Skalierung sogar vollständig. Dieser Sprung in der Intensität des Autofokussignals ist somit ein deutliches Zeichen, dass die Immersion hergestellt ist, so dass die Zufuhr unmittelbar oder nach einem festgelegten zeitlichen Versatz gestoppt wird. Erfolgt innerhalb einer festgelegten Zeit kein Intensitätssprung, ist dies ein Indiz für eine Fehlerbetrachtung. Es kann beispielsweise ein elektronischer oder mechanischer Defekt des Immersionssystems, beziehungsweise des Fördersystems vorliegen. Geht man davon aus, dass kein technischer Defekt vorliegt, kann man so auch einen Mangel an Immersionsmedium erkennen.

Auf Grund des Brechzahlunterschiedes zwischen Luft und Immersionsmedium verschiebt sich objektivabhängig der Fokuspunkt des Systems um einen aus der Optikrechnung bekannten Betrag.

Der Fokus des Systems wird dann um diesen bekannten Betrag zum Präparateträgerboden nachgestellt. Die Software der Autofokuseinrichtung passt dieses jetzt schwache Autofokussignal wieder an den maximalen Dynamikbereich der Detektionseinheit an, um im immergierten Zustand arbeiten zu können.

Der Intensitätsunterschied des Autofokussignals zwischen nicht immergiertem und immergiertem Zustand kann zur Bewertung des Immersionsvorganges genutzt werden.

Sollten Fremdkörper oder Luftblasen im Immersionsfilmbereich vorhanden sein, führt dies zu Abweichungen von der Normalform des Autofokussignals und kann somit ebenfalls detektiert werden. Durch weitere Zufuhr des Immersionsmediums, beziehungsweise durch einen Neustart des gesamten Immersionsvorganges lassen sich die Luftblasen oder anderweitige Fremdkörper wieder entfernen.

Im umgekehrten Fall kann im Autofokusmodus auch ein Abreißen der vorhandenen Immersion detektiert werden, da in diesem Fall das Autofokussignal ebenfalls verschwindet, beziehungsweise sich deutlich ändert, weil sich der Fokuspunkt des Systems wieder um den bekannten Betrag zurück verschiebt und sich dabei das Signal ändert. Kontrolliert man das Autofokussignal des Präparateträgerbodens an der zu erwarteten Stelle, so ist das Autofokussignal bedingt durch den Reflex des Luft/Glas-Überganges deutlich stärker, als das des Immersion/Glas-Überganges. Dieser Intensitätssprung kann wieder mit Hilfe der automatischen Belichtungssteuerung ausgewertet werden. Hierzu können in der Software beliebige Grenzwerte zwischen den Belichtungszeiten (mit und ohne Immersion) als Kriterium festgelegt werden.

Dass erfindungsgemäße Verfahren ermöglicht eine Detektion der Autoimmersion mit der vorhandenen Hardware eines entsprechend ausgerüsteten Mikroskops. Es muss hardwareseitig keine weitere Sensorik nachgerüstet werden, da das Verfahren vollständig in der Software zu vorhandenen Hardwarekomponenten abgebildet werden kann.

Da sich bei Veränderung des Immersionsfilmbereiches neben der Intensität des Autofokussignals auch die optische Weglänge zwischen der Frontlinse des Mikroskopobjektivs und dem Präparat ändert, ist es von Vorteil, wenn der Zeitpunkt für die Veränderung der Zufuhr des Immersionsmediums in den Immersionsfilmbereich in Abhängigkeit vom veränderten Autofokussignal und /oder der veränderten Weglänge eingestellt wird.

Betrachtet man das alternative, beziehungsweise ergänzende Verfahren der Einspiegelung eines Modulationsobjektbildes, so bewirkt die Änderung der Weglänge eine Defokussierung des Modulationsobjektbild-Reflexes und eine Intensitätsänderung des Selben, wenn er im Zustand ohne Immersionsmedium fokussiert wurde. Diese Information kann beispielsweise über die Kantensteilheit eines verwendeten Gitters detektiert und zusätzlich oder allein zur Erkennung des Immersionszustandes genutzt werden. Wird der Reflex wieder fokussiert, so zeigt sich auch hier, wie im bisher beschriebenen Verfahren, ein Intensitätsunterschied des Reflexbildes.

Bei einer Verwendung der Anordnung eines Gitterbildes in einer Zwischenbildebene eines Auflichtstrahlenganges würde dann für den Strahlteiler im Filterwürfel des Mikroskopstrahlenganges ein spektraler Verlauf benötigt, der bei der zur Beleuchtung des Gitters genutzten Wellenlänge möglichst einen Reflexionsgrad zwischen 25% und 75% besitzt und bei dem die Summe aus Transmission und Reflexion > 90% beträgt. Die Intensität des Reflexes wird dann über die mikroskopische Detektion beurteilt, wobei auch eine räumliche Filterung oder Fourier-Filterung zur Unterdrückung von Falschlicht als Nachbearbeitung durchgeführt werden kann.

Anhand eines Ausführungsbeispiels soll das erfindungsgemäße Verfahren näher erläutert werden. Dazu zeigen:
Fig.1: Eine Darstellung der nach WO 2007/144197 A1 bekannten Autofokuseinrichtung für die Mikroskopie,
Fig.2: eine Darstellung der Auflichtbeleuchtung nach Fig.1
Fig.3: eine Darstellung eines hohen Autofokussignals von einem Luft/Glas-Übergang und
Fig.4: eine Darstellung eines niedrigen Autofokussignals von einem Immersionsmedium/Glas-Übergang.

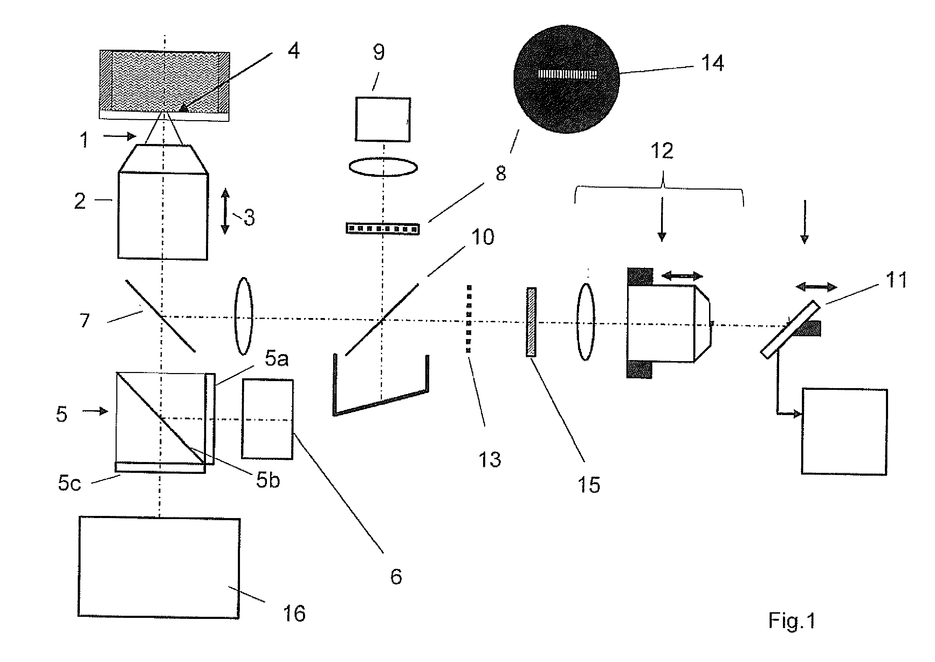

Fig.1 zeigt eine Darstellung der nach WO 2007/144197 A1 bekannten Autofokuseinrichtung für die Mikroskopie mit deren Hilfe die Detektion eines Immersionsmediums sowie die Steuerung deren Zufuhr in den Immersionsfilmbereich 1 zwischen einem Mikroskopobjektiv 2 mit einem z- Trieb 3 und einem Präparat 4 durchgeführt wird.

Zum besseren Verständnis des erfindungsgemäßen Verfahrens mit einer Auflicht-Gitterbildeinspiegelung soll diese kurz erläutert werden.

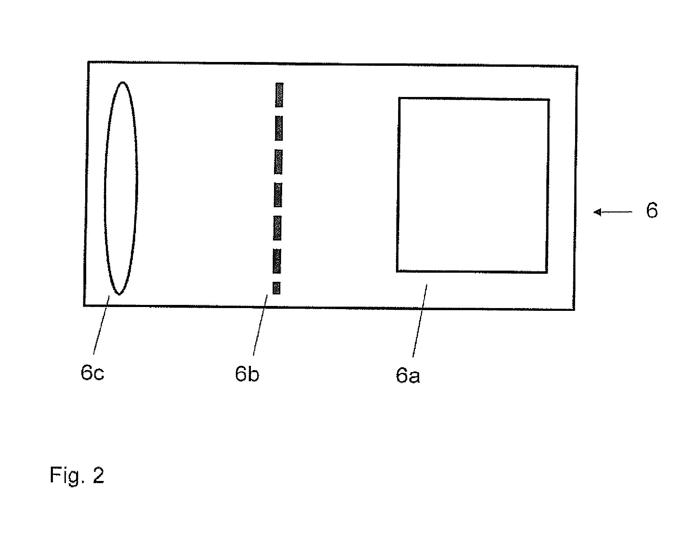

Über einen Strahlteiler 5b eines Filterwürfels 5, der auch als Dichroit ausgebildet sein kann, ist der Mikroskopbeleuchtungsstrahlengang aus einer Auflichtbeleuchtung 6, bestehend aus einer Lichtquelle 6a, einem Modulationsobjekt (Liniengitter) 6b und einer Auflicht-Tubuslinse 6c (Fig.2), eingekoppelt, wobei das Präparat 4 über den Strahlteiler 5b und einen dichroitischen Strahlteiler 7 durch das Mikroskopobjektiv 2 hindurch beleuchtet wird. Der mit dem Strahlteiler 5b versehene Filterwürfel 5 besitzt in dieser Anwendung zusätzlich in Position 5a und 5c Selektionsfilter.

Die Autofokuseinrichtung verfügt über einen Lichtmodulator (Transmissionsgitter) 8 der von einer Infrarot-LED Lichtquelle 9 (IR-LED Lichtquelle), deren Schwerpunktwellenlänge oberhalb 800 nm liegt, für einen Reflexionsbetrieb beleuchtet wird. Ein vom Lichtmodulator 8 generiertes Modulationsobjekt wird über einen Strahlteiler 10 und den Strahlteiler 7 in den Immersionsfilmbereich 1, beziehungsweise auf das Präparat 4 projiziert. Da eine Detektionseinheit 11 (Kamera) mit einer z-Verschiebevorrichtung und einer Abbildungsoptik 12, bestehend aus einem Autofokus-Objektiv, ebenfalls mit einer z-Verschiebevorrichtung versehen, vorgeordnet ist, wird ein Zwischenbild 13 des Lichtmodulators 8 auf der Detektionseinheit 11 (Kamera) abgebildet.

Der als Transmissionsgitter ausgebildete Lichtmodulator 8 ist als spaltenförmige Blende mit einem Streifengitter 14 versehen. Ferner ist dem Zwischenbild 13 ein Sperrfilter 15 vorgelagert, der dafür sorgt, dass nur die Strahlung des entsprechenden Autofokus-Spektralbereiches zur Detektionseinheit 11 gelangt.

Der Zustand des Immersionsfilmbereiches 1 wird erfindungsgemäß über das Autofokussignals der IR-LED Lichtquelle 9 in einer Detektionseinheit der Autofokuseinrichtung erfasst, ausgewertet und zum Zwecke einer Veränderung sowie einer Fehlerbehandlung des Immersionsvorganges an eine Steuereinheit weitergeleitet wird.

Dies erfolgt durch folgende Verfahrensschritte:
- Vorzugsweise automatische Fokussierung ohne Immersionsmedium zwischen der Frontlinse und einem Präparat (4) auf den Boden eines Präparateträgers,
- Erfassen des Autofokussignals als Rückreflex von einer Autofokuseinrichtung und/oder Erfassen des Reflexes des in der Zwischenbildebene der Auflichtbeleuchtung (6) angeordneten Modulationsobjektes (6b) durch eine der Detektionseinheiten (11 oder 16),
- Anpassen des Autofokussignals und/oder des Reflexes vom Modulationsobjekt (6b) von der Software der verwendeten Einrichtung an den maximalen Dynamikbereich der verwendeten Detektionseinheit (11 oder 16),
- Zufuhr des Immersionsmediums in den Immersionsfilmbereich (1) zwischen der Frontlinse des Mikroskopobjektivs (2) und dem Präparat (4) (Autoimmersion),
- Erfassen und Detektieren der veränderten Intensität des Autofokussignals als Rückreflex und/oder als Veränderung der optischen Weglänge zwischen der Frontlinse des Mikroskopobjektivs (2) und der reflektierenden Grenzfläche des Immersionsfilmbereiches (1) am Präparateträgerboden und/oder Erfassen und detektieren der veränderten Intensität und/oder der Schärfe des Reflexes vom Modulationsobjekt (6b) und
- Verändern oder Stoppen der Zufuhr des Immersionsmediums in Abhängigkeit von der Skalierung der Intensität des Autofokussignals und/oder der Weglängenveränderung des Autofokussignals und/oder der Intensität des Reflexes vom Modulationsobjekt (6b).

Ein Durchschlagen des von der IR-LED Lichtquelle 9 ausgehenden Lichtes in das mikroskopische Bild wird durch einen Blockfilter 5c (Selektionsfilter), der vor der Detektionseinheit 16 angeordnet wird, verhindert.

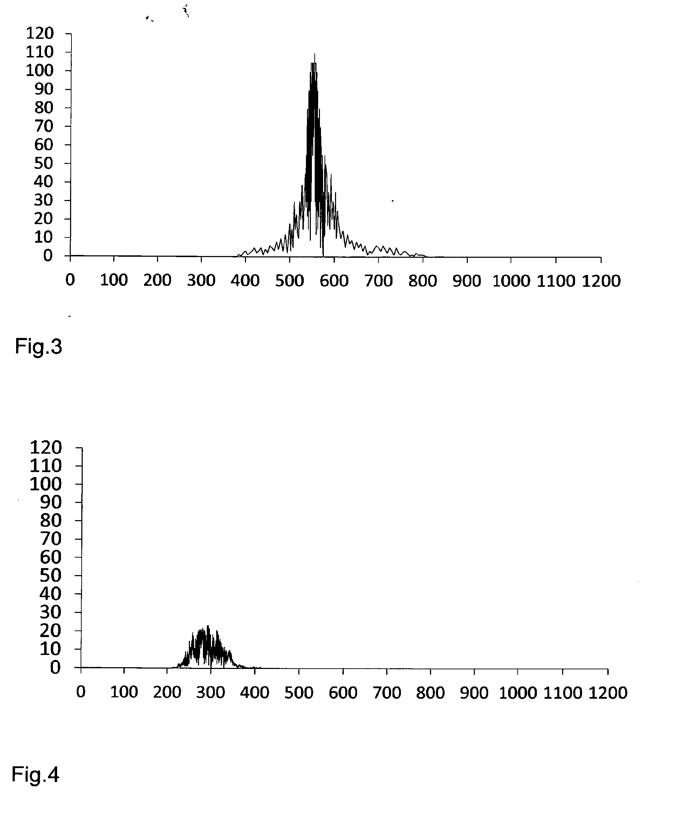

Die Figuren 3 und 4 zeigen verschiedene Rückreflexe (Autofokussignale), die in Abhängigkeit von den im Immersionsfilmbereich 1 vorhandenen Grenzflächen zwischen unterschiedlichen Materialien variieren, so dass dadurch exakt der vorhandene Immersionszustand erkannt wird.

Fig.2 zeigt ein relativ hohes Autofokussignal von einem Luft/Glas-Übergang, während in Fig.3 ein deutlich geringeres Autofokussignal von einem Immersionsmedium/Glas-Übergang zu sehen ist.

### Bezugszeichenliste

1 Immersionsfilmbereich
2 Mikroskopobjektiv
3 Z-Trieb
4 Präparat
5 Filterwürfel
5a Selektionsfilter
5b Strahlteiler
5c Selektionsfilter
6 Auflichtbeleuchtung
6a Lichtquelle
6b Modulationsobjekt (Liniengitter)
6c Auflicht-Tubuslinse
7 Strahlteiler
8 Lichtmodulator (Transmissionsgitter)
9 Infrarot-LED Lichtquelle(IR-LED)
10 Strahlteiler
11 Detektionseinheit (Kamera)
12 Abbildungsoptik
13 Zwischenbild
14 Streifengitter
15 Sperrfilter
16 Detektionseinheit

## Patentansprüche

1. Verfahren zur Detektion und zur Zufuhrsteuerung eines Immersionsmediums in den Immersionsfilmbereich (1) zwischen der Frontlinse eines Mikroskopobjektivs (2) und einem Präparat (4), insbesondere bei automatisierten Mikroskopen, unter Verwendung einer Lichtquelle (9), welche über einen Strahlteiler (10) in den Mikroskopstrahlengang eingespiegelt wird, **dadurch gekennzeichnet, dass** ein Autofokussignal der Lichtquelle (9) und/oder ein Reflex eines in der Zwischenbildebene einer Auflichtbeleuchtung (6) angeordneten Modulationsobjektes (6b) den Zustand des Immersionsfilmbereiches (1) in einer Detektionseinheit (16) des Mikroskops oder einer Detektionseinheit (11) der Autofokuseinrichtung erfasst, ausgewertet und zum Zwecke einer Veränderung sowie einer Fehlerbehandlung des Immersionsvorganges an eine Steuereinheit weitergeleitet wird.

2. Verfahren zur Detektion und zur Zufuhrsteuerung eines Immersionsmediums nach Anspruch 1, **gekennzeichnet durch** folgende Verfahrensschritte:
- Fokussierung ohne Immersionsmedium zwischen der Frontlinse und einem Präparat (4) auf den Boden eines Präparateträgers,
- Erfassen des Autofokussignals als Rückreflex von einer Autofokuseinrichtung und/oder Erfassen des Reflexes des in der Zwischenbildebene der Auflichtbeleuchtung (6) angeordneten Modulationsobjektes (6b) **durch** eine der Detektionseinheiten (11 oder 16),
- Anpassen des Autofokussignals und/oder des Reflexes vom Modulationsobjekt (6b) von der Software der verwendeten Einrichtung an den maximalen Dynamikbereich der verwendeten Detektionseinheit (11 oder 16),
- Zufuhr des Immersionsmediums in den Immersionsfilmbereich (1) zwischen der Frontlinse und dem Präparat (4) (Autoimmersion),
- Erfassen und Detektieren der veränderten Intensität des Autofokussignals als Rückreflex und/oder als Veränderung der optischen Weglänge zwischen der Frontlinse und der reflektierenden Grenzfläche des Immersionsfilmbereiches (1) und/oder Erfassen und detektieren der veränderten Intensität und/oder der Schärfe des Reflexes vom Modulationsobjekt (6b) und
- Verändern oder Stoppen der Zufuhr des Immersionsmediums in Abhängigkeit von der Skalierung der Intensität des Autofokussignals und/oder der Weglängenveränderung des Autofokussignals und/oder der Intensität des Reflexes vom Modulationsobjekt (6b).

3. Verfahren zur Detektion und Zufuhrsteuerung eines Immersionsmediums nach den Ansprüchen 1 und 2, **dadurch gekennzeichnet, dass** der Zeitpunkt für die Veränderung der Zufuhr des Immersionsmediums in den Immersionsfilmbereich (1) in Abhängigkeit vom veränderten Autofokussignal und /oder der veränderten Weglänge und/oder des veränderten Reflexes vom Modulationsobjekt (6b) eingestellt wird.

4. Verfahren zur Detektion und Zufuhrsteuerung eines Immersionsmediums nach den Ansprüchen 1 bis 3, **dadurch gekennzeichnet, dass** nach Beendigung der Zufuhr des Immersionsmediums in den Immersionsfilmbereich (1) die durch den Brechzahlunterschied zwischen Luft und Immersionsmedium hervorgerufene objektivabhängige Verschiebung des Fokuspunktes des Systems korrigiert wird.

5. Verfahren zur Detektion und Zufuhrsteuerung eines Immersionsmediums nach Anspruch 4, **dadurch gekennzeichnet, dass** nach der Korrektur des Fokuspunktes die Software der Autofokuseinrichtung das veränderte Autofokussignal aus dem Immersionsfilmbereich erneut zum Zwecke der Arbeitens im immergierten Zustand an den maximalen Dynamikbereich der Detektionseinheit angepasst wird.

6. Verfahren zur Detektion und Zufuhrsteuerung eines Immersionsmediums nach einem der vorgenannten Ansprüche, **dadurch gekennzeichnet, dass** Abweichungen von der Normalform des veränderten Autofokussignals und/oder des Reflexes vom Modulationsobjekt (6b) im immergierten Zustand während des Mikroskopierens detektiert werden, so dass korrigierend auf den Immersionsvorgang, beziehungsweise Immersionszustand eingegriffen werden kann.

7. Verfahren zur Detektion und Zufuhrsteuerung eines Immersionsmediums nach einem der vorgenannten Ansprüche, **dadurch gekennzeichnet, dass** Grenzwerte für das Autofokussignal und/oder für den Reflex vom Modulationsobjekt (6b) zwischen den Belichtungszeiten ohne Immersionsmedium und mit Immersionsmedium im Immersionsfilmbereich (1) festgelegt werden.

8. Verfahren zur Detektion und Zufuhrsteuerung eines Immersionsmediums nach den Ansprüchen 1,2,3,6 und 7, **dadurch gekennzeichnet, dass** als Modulationsobjekt (6b) ein Liniengitter verwendet wird.

9. Verfahren zur Detektion und Zufuhrsteuerung eines Immersionsmediums nach den Ansprüchen 1,2,3,6,7 und 8, **dadurch gekennzeichnet, dass** zur Erfassung der Intensität des Reflexes vom Modulationsobjekt (6b) ein Strahlteiler (5b) in einem Filterwürfel (5) verwendet wird, der einen spektralen Verlauf benötigt, der bei der zur Beleuchtung des Modulationsobjektes (6b) genutzten Wellenlänge einen
Reflexionsgrad zwischen 25% und 75% besitzt und bei dem die Summe aus Transmission und Reflexion > 90% beträgt.

10. Verfahren zur Detektion und Zufuhrsteuerung eines Immersionsmediums nach einem der vorgenannten Ansprüche, **dadurch gekennzeichnet, dass** die Detektion des Autofokussignals und/oder die Detektion des Reflexes vom Modulationsobjekt (6b) über eine räumliche Filterung und/oder Fourier-Filterung zur Unterdrückung von Falschlicht vorgenommen wird.
